# EUROPÄISCHE PATENTANMELDUNG

(11) **EP 1 769 907 A1**
(43) Veröffentlichungstag der Anmeldung: **04.04.2007**
(21) Anmeldenummer: 05109063.7
(22) Anmeldetag: 30.09.2005
(51) Int. Cl.: B32B 27/08, E21D 11/38, E02D 31/00

(54) **Mehrschichtiger Verbundwerkstoff**

(71) Anmelder: Sika Technology AG, 6340 Baar (CH)
(72) Erfinder: Arber, Willy, 8174, Stadel b/Niederglatt (CH); Guyer, Peter, 3366, Bollodingen (CH); Slongo, Mario, 1712, Tafers (CH)
(74) Vertreter: Isler, Jörg

(57) **Zusammenfassung**

Die Erfindung betrifft einen mehrschichtigen Verbundwerkstoff umfassend mindestens eine erste Schicht **S1** und mindestens eine zweite Schicht **S2,** wobei die erste Schicht **S1** einen ersten Werkstoff **W1** aus Polyvinylchlorid oder einem thermoplastischen Polyurethan und einem thermoplastischen Polymer P3 enthält oder daraus besteht und die zweite Schicht **S2** einen zweiten Werkstoff **W2** aus einem Polymer **P2** und einem thermoplastischen Polymer **P3** enthält oder daraus besteht, wobei das Polymer **P2** mindestens eine Monomereinheit **M1** ausgewählt aus der Gruppe bestehend aus Ethylen-, Propylen- und Butylen-Einheit und Mischungen davon aufweist, und wobei die Menge der Monomereinheit **M1** mindestens 50% aller Monomereinheiten des Polymers **P2** beträgt.

## Beschreibung

### Technisches Gebiet

Die Erfindung betrifft das Gebiet der Folienverklebung und Folienverschweissung.

### Stand der Technik

Beim Verbinden von Kunststoffen stellt sich vielfach das Problem, dass sich diese Kunststoffe schlecht verschweissen oder verkleben lassen. Es werden deshalb vielfach Vorbehandlungen eingesetzt. Einerseits werden Voranstriche, sogenannte Primer, verwendet, welche haftvermittelnde Funktionen erfüllen. Andererseits werden Reiniger mit Lösungsmittel eingesetzt. Bei Kunststoffen von unterschiedlicher Zusammensetzung besteht zusätzlich das Problem, dass sie vielfach weder verschweissbar sind, noch dass ein Klebstoff auf beiden Kunststoffen haftet.

### Darstellung der Erfindung

Aufgabe der vorliegenden Erfindung ist es daher, Zusammensetzungen bereit zu stellen, welche geeignet sind, zwei verschiedene Kunststoffe oder ein Kunststoff mit Beton miteinander zu verkleben oder zu verschweissen. Überraschenderweise wurde gefunden, dass ein mehrschichtiger Verbundwerkstoff sowie ein Verfahren gemäss den unabhängigen Ansprüchen diese Aufgabe löst. Besonders bevorzugte Ausführungsformen sind in den Unteransprüchen angegeben.

Dieser mehrschichtige Verbundwerkstoff zeichnet sich unter anderem dadurch aus, dass die beiden Oberflächen des Verbundwerkstoffs gut mit verschiedenen Kunststoffen verschweiss- oder verklebbar sind. Der erfindungsgemässe Verbundwerkstoff dient als Übergang zwischen zwei verschiedenen Kunststoffen und ermöglicht auch das Verbinden zweier unterschiedlicher Kunststoffen. Zudem weisen derartige Verbundwerkstoffe eine hervorragende Verarbeitbarkeit auf.

### Weg zur Ausführung der Erfindung

Die vorliegende Erfindung betrifft einen mehrschichtigen Verbundwerkstoff umfassend mindestens eine erste Schicht **S1** aus einem ersten thermoplastischen polymeren Werkstoff **W1** und mindestens eine zweite Schicht S2 aus einem zweiten thermoplastischen polymeren Werkstoff **W2**,
wobei der erste Werkstoff **W1** ein Polymer **P1**, aus einem thermoplastischen Polyurethan oder einem Polyvinylchlorid (PVC), und mindestens ein thermoplastisches Polymer **P3** enthält oder daraus besteht,
wobei der zweite Werkstoff **W2** ein Polymer **P2** und mindestens ein thermoplastisches Polymer **P3** enthält oder daraus besteht, wobei das Polymer **P2** mindestens eine Monomereinheit **M1**, und gegebenenfalls eine Monomereinheit **M2**, aufweist, wobei die Monomereinheit **M1** ausgewählt ist aus der Gruppe bestehend aus Ethylen-, Propylen- und Butylen-Einheit und Mischungen davon, und wobei die Anzahl der Monomereinheit **M1** mindestens 50% aller Monomereinheiten des Polymers **P2** beträgt,
und wobei das Polymer **P3** des ersten Werkstoffs **W1** und des zweiten Werkstoffs **W2** dasselbe Polymer ist.

Vorzugsweise sind die Polymere **P1, P2** und **P3** voneinander verschieden.

Der erste thermoplastische polymere Werkstoff **W1** der ersten Schicht **S1** des mehrschichtigen Verbundwerkstoffs enthält oder besteht aus einem Polymer **P1** und mindestens einem thermoplastischen Polymer **P3**.

Das Polymer **P1** besteht aus einem thermoplastischen Polyurethan oder einem Polyvinylchlorid (PVC). Als bevorzugtes Polymer **P1** hat sich PVC erwiesen.

In einer weiteren Ausführungsform handelt es sich beim Polymer **P1** um ein Polymer basierend auf einem thermoplastischen Polyurethan. Polyurethan basierende Polymere werden aus Polyisocyanat, vorzugsweise aus mehreren Isocyanat-Gruppen aufweisenden Polyurethanprepolymeren hergestellt.

Das Polyurethanprepolymer wird aus der Umsetzung mindestens eines Polyisocyanates mit einer Verbindung, welche zwei oder mehrere NCO-reaktive funktionelle Gruppen aufweist, erhalten. Derartige NCO-reaktive Gruppen sind insbesondere Hydroxyl-, Merkapto- oder primäre oder sekundäre Amino-Gruppen.

Als Verbindung, welche zwei oder mehrere NCO-reaktive funktionelle Gruppen aufweist, gelten insbesondere Polyole, Polyamine, oder Polyaminoalkohole. Beispiele für Polyaminoalkohole sind Diethanolamin, Ethanolamin, Triethanolamin. Als Polyole sind Polyetherpolyole, Polyesterpolyole und Polycarbonatpolyole bevorzugt. Bevorzugt sind als Polyole Diole. Insbesondere bevorzugt sind Gemische von Polyolen, insbesondere ein Gemisch von nieder- und höhermolekularen Polyolen, insbesondere Diolen, insbesondere von nieder- und höhermolekularen Polyester-, Polyester- und Polycarbonatpolyolen, vorzugsweise ein Gemisch von nieder- und höhermolekularen Polyester-, Polyether- und Polycarbonatdiolen. Niedermolekulare Polyole haben bevorzugt ein Molekulargewicht von 50 bis 500 g/mol. Höhermolekulare Polyole haben bevorzugt ein Molekulargewicht von über 500 g/mol, noch mehr bevorzugt von 550 bis 5000 g/mol, insbesondere bevorzugt von 800 bis 3000 g/mol.

Als Polyesterpolyole sind insbesondere jene geeignet, welche hergestellt sind beispielsweise aus zwei- bis dreiwertigen Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.

Besonders bevorzugte Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol.

Besonders bevorzugt sind Polyurethanprepolymere aus Polyolen und Polyisocyanten, insbesondere aus Diolen, vorzugsweise Polyesterdiol, Polyetherdiol oder Butandiol, Triolen oder Diol/Triol-Mischungen sowie aus Diisocyanaten, vorzugsweise aromatischen, aliphatischen oder cycloaliphatischen Diisocyanaten, Trisocyanaten oder Diisocyanat/Trisocyanat-Mischungen.

Der zweite thermoplastische polymere Werkstoff **W2** der zweiten Schicht **S2** des mehrschichtigen Verbundwerkstoffs enthält oder besteht aus einem Polymer **P2** und mindestens einem thermoplastischen Polymer **P3**.

Das Polymer **P2** weist mindestens eine Monomereinheit **M1**, und gegebenenfalls einer Monomereinheit **M2**, auf, wobei die Monomereinheit **M1** ausgewählt ist aus der Gruppe bestehend aus Ethylen-, Propylen- und Butylen-Einheit und Mischungen davon, und wobei die Anzahl der Monomereinheit **M1** mindestens 50%, bevorzugt mindestens 60%, noch mehr bevorzugt mindestens 80%, am meisten bevorzugt 90% bis 100% aller Monomereinheiten des Polymers **P2** beträgt.

Unter Monomereinheit wird im ganzen vorliegenden Dokument eine Struktureinheit verstanden, welche von ungesättigten Monomeren nach erfolgter radikalischer Polymerisation herrührt. Unter der Monomereinheit **M1** wird folglich eine Struktureinheit verstanden, welche von den ungesättigten Monomeren Ethen, Propen oder 1-Buten sowie Mischungen davon nach erfolgter radikalischer Polymerisation herrührt.

Als bevorzugte Polymere **P2** haben sich solche erwiesen, bei welchen die Monomereinheit **M1** nach der Polymerisation chloriert oder chlorsulfoniert worden ist.

Das Polymer **P2** kann neben der Monomereinheit **M1** weitere Monomereinheiten enthalten. Als geeignete weitere Monomereinheiten haben sich Einheiten von Vinylacetat, Acrylat, Methacrylat, Acrylsäure, Methacrylsäure, Fumarsäure, Fumarsäureester, Maleinsäure, Maleinsäureester, Maleinsäureanhydrid, Styrol, Acrylonitril, und Vinylchlorid erwiesen.

Vorzugsweise besteht das Polymer **P2** aus einem Polyolefin, vorzugsweise aus Polyethylen, Polypropylen, chloriertem Polyethylen, chloriertem Polypropylen, chlorsulfoniertem Polyethylen, chlorsulfoniertem Polypropylen oder chlorsulfoniertem Copolymer aus Ethylen und Propylen. Als besonderes bevorzugtes Polymer **P2** hat sich chlorsulfoniertes Polyethylen oder chlorsulfoniertes Polypropylen erwiesen. Als meist bevorzugt gilt chlorsulfoniertes Polyethylen, insbesondere wie es unter dem Handelsnamen Hypalon® von der Firma DuPont kommerziell erhältlich ist.

In einer Ausführungsform ist das Polymer **P3** des ersten Werkstoffs **W1** und des zweiten Werkstoffs **W2** ein thermoplastisches Polyurethan, hergestellt aus Polyisocyanat, vorzugsweise Diisocyanat, und Polyesterpolyol oder Polyetherpolyol, vorzugsweise Polyesterdiol oder Polyetherdiol.

In einer weiteren bevorzugten Ausführungsform ist das Polymer **P3** des ersten Werkstoffs **W1** und des zweiten Werkstoffs **W2** ein Homo- oder Copolymer **CP** aus mindestens zwei ethylenisch ungesättigten Monomeren, wobei mindestens eines der Monomere ausgewählt ist aus der Gruppe bestehend aus Ethylen, Vinylacetat, Acrylat, Methacrylat, Acrylsäure, Methacrylsäure, Fumarsäure, Maleinsäure, Styrol, Acrylonitril, Butadien sowie deren Mischungen. Auch Mischungen von zwei oder mehreren Polymeren, sogenannte Polymerblends, können verwendet werden als Polymer **P3**.

Als besonders bevorzugt gelten die Copolymere **CP** der Monomere Ethylen und Vinylacetat (EVA) oder Ethylen und (Meth)Acrylat, sowie gegebenenfalls Kohlenmonoxid. Das Copolymer **CP** ist vorzugsweise aufgebaut aus 30-90 Gew.%, bevorzugt 55-75 Gew.% Ethylen-Einheiten und 10-70 Gew.%, bevorzugt 25-45 Gew.% Vinylacetat-, oder (Meth)Acrylat-Einheiten und gegebenenfalls 1-20 Gew.% Kohlenmonoxid-Einheiten. Die Gew.% sind jeweils bezogen auf das Gesamtgewicht des Copolymers. Als (Meth)Acrylat besonders bevorzugt sind Acrylate, insbesondere das n-Butylacrylat. Die Copolymere ohne Kohlenmonoxid haben vorzugsweise einen Schmelzindex (Melt Flow Index oder MFI) von 0.1-100 g / 10 min, besonders bevorzugt von 0.3-20 g / 10 min, bestimmt nach ISO 1133, gemessen bei 2.16 kg und 190°C. Die Copolymere umfassend Kohlenmonoxid haben vorzugsweise einen Schmelzindex (MFI) von 1-50 g / 10 min, besonders bevorzugt von 5-40 g / 10 min, bestimmt nach ISO 1133, gemessen bei 2.16 kg und 190°C. Als besonder bevorzugtes Copolymer **CP** hat sich das Terpolymer Ethylen-Vinylacetat-Kohlenmonoxid (EVACO) oder das Terpolymer Ethylen-(n-Butylacrylat)-Kohlenmonoxid (ENBACO), insbesondere wie es unter dem Handelsnamen Elvaloy HP® 441 von der Firma DuPont kommerziell erhältlich ist, erwiesen.

Für den Fachmann ist selbstverständlich klar, dass mit Monomereinheiten nicht gemeint ist, dass das Copolymer **CP** freie Monomere enthält, sondern dass die Monomereinheiten copolymerisiert im Copolymer **CP** vorliegen.

Als weiterhin bevorzugt gelten über Metallocenkatalyse hergestellte Copolymere **CP** der Monomere Ethylen und Octen, oder Ethylen und Hexen oder Ethylen und Buten, vorzugsweise mit einer Dichte von 0.85 bis 0.945 g/cm³, bevorzugt von 0.86 bis 0.9 g/cm³.

In einer weiteren Ausführungsform ist das Copolymer **CP** des Polymers **P3** ein Copolymer der Monomere Butadien und Acrylonitril, wobei das Copolymer vorzugweise 18-48 Gew.%, besonders bevorzugt 25-40 Gew.%, Acrylonitrileinheiten enthält. Die Gew.% sind bezogen auf das Gesamtgewicht des Copolymers.

Weiterhin als bevorzugt hat sich als Copolymer **CP** ein Terpolymer der Monomere Acrylat, Styrol und Acrylonitril erwiesen.

Zusätzlich geeignet als Copolymer **CP** ist chloriertes Polyethylen, vorzugsweise mit einem Gehalt an Chloratomen von 20 bis 60 Gew.-%, bevorzugt von 25 bis 50 Gew.-%, noch mehr bevorzugt von 30 bis 40 Gew.-%, wobei die Gew.-% bezogen sind auf das Gesamtgewicht des Copolymers.

Das Polymer **P3** liegt vorzugsweise in einer Menge von 0.5-80 Gew.-%, bevorzugt von 5-60 Gew.-%, noch mehr bevorzugt von 10-50 Gew.-%, insbesondere bevorzugt von 20-35 Gew.-% bezogen auf das Gesamtgewicht des Werkstoffs **W1** im Werkstoff **W1** vor.

Der zweite Werkstoff **W2** enthält mindestens ein Polymer **P3** in der Menge von 0.5-50 Gew.-%, bevorzugt von 5-30 Gew.-%, noch mehr bevorzugt von 10-20 Gew.-%, bezogen auf das Gesamtgewicht des Werkstoffs **W2**.

Als weitere Bestandteile der Werkstoffe **W1** und/oder **W2** können weitere Zusatzstoffe vorhanden sein. Insbesondere sind dies für thermoplastische Kunststoffe üblichen Bestandteile und Verarbeitungsmittel, wie beispielsweise Füllstoffe wie z.B. Kreide, Verlaufsmittel wie z.B. Metallseifen, Additive wie UV- und Hitzestabilisatoren, Stabilisatoren wie z.B. auf Ba/Zn- oder Ca/Zn-Basis, Weichmacher wie z.B. epoxidiertes Sojabohnenöl, Gleitmittel, Trockungsmittel, Entschäumer, Tenside, Biozide, Antiabsetzmittel, Flammschutzmittel, Antioxidantien wie z.B. auf phenolischer Basis, Geruchsstoffe, Pigmente wie z.B. Titandioxid oder Russ, und Farbstoffe. Der Anteil an weiteren Zusatzstoffen beträgt zwischen 0 und 70 Gew.-%, insbesondere zwischen 5 und 50 Gew.-%, besonders bevorzugt zwischen 10 und 30 Gew.-%, bezogen auf das Gewicht des Werkstoffs **W1** oder **W2**. Vorzugsweise werden dem Werkstoff **W1** und dem Werkstoff **W2** unterschiedliche Pigmente oder Farbstoffe zugegeben, damit die zwei Schichten auch farblich voneinander unterschieden werden können. Dies ist besonders von Vorteil, wenn der mehrschichtige Verbundwerkstoff eine Verletzung, z.B. einen Riss oder Schnitt, aufweist, und die Verletzung besser entdeckt werden kann durch das Sichten der andersfarbigen Schicht.

Der erste Werkstoff **W1** der ersten Schicht **S1** und der zweite Werkstoff **W2** der zweiten Schicht **S2**, sind miteinander kraftschlüssig, vorzugsweise in direktem Kontakt miteinander, verbunden. Vorzugsweise besteht der mehrschichtige Verbundwerkstoff aus zwei Schichten **S1** und **S2**, und es liegt zwischen der ersten Schicht **S1** und der zweiten Schicht **S2** keine weitere Schicht wie z.B. ein Klebstoff vor.

Unter "direktem Kontakt miteinander" wird verstanden, dass keine weitere Schicht oder Substanz zwischen zwei Werkstoffen vorliegt und dass die zwei Werkstoffe direkt miteinander verbunden sind, beziehungsweise aneinander haften, z.B. indem sie miteinander verschweisst oder laminiert sind. Am Übergang zwischen zwei Werkstoffen können die zwei Werkstoffe ineinander vermischt vorliegen.

Der geeignete mehrschichtige Verbundwerkstoff soll bei Temperaturen unter 60°C, insbesondere unter 70°C bevorzugt unter 80°C nicht klebrig sein. Der thermoplastische Verbundwerkstoff ist vorzugsweise elastisch und weist insbesondere eine Bruchdehnung zwischen 200 und 800 % auf.

Die erste Schicht **S1** und die zweite Schicht **S2** des erfindungsgemässen mehrschichtige Verbundwerkstoffs weisen eine Dicke im Bereich von 10 µm bis 5 mm, insbesondere von 100 µm bis 2 mm, besonders bevorzugt von 500 µm bis 1.5 mm, auf. Der erfindungsgemässe mehrschichtige Verbundwerkstoff weist eine Dicke von 100 µm bis 10 mm, insbesondere von 1 mm bis 5 mm, besonders bevorzugt von 1.5 mm bis 3 mm, auf.

Weiterhin kann der mehrschichtige Verbundwerkstoff eine weitere Schicht **S3** aus einem weiteren Werkstoff **W3** umfassen, welche mit dem ersten Werkstoff **W1** der ersten Schicht **S1** kraftschlüssig, vorzugsweise in direktem Kontakt, verbunden ist. Vorzugsweise enthält oder besteht der Werkstoff **W3** aus Polyvinylchlorid.

In einer weiteren Ausführungsform kann der mehrschichtige Verbundwerkstoff eine weitere Schicht **S4** aus einem weiteren Werkstoff **W4** umfassen, welche mit dem zweiten Werkstoff **W2** der zweiten Schicht **S2** kraftschlüssig, vorzugsweise in direktem Kontakt, verbunden ist.

Der weitere Werkstoff **W4** der Schicht **S4** enthält oder besteht aus einem Polymer **P4**. Das Polymer **P4** weist mindestens eine Monomereinheit **M3**, und gegebenenfalls einer Monomereinheit **M4**, auf, wobei die Monomereinheit **M3** ausgewählt ist aus der Gruppe bestehend aus Ethylen-, Propylen- und Butylen-Einheit und Mischungen davon, und wobei die Menge der Monomereinheit **M1** mindestens 50%, bevorzugt mindestens 60%, noch mehr bevorzugt mindestens 80%, am meisten bevorzugt 90% bis 100% aller Monomereinheiten des Polymers **P4** beträgt.

Unter Monomereinheit wird im ganzen vorliegenden Dokument eine Struktureinheit verstanden, welche von ungesättigten Monomeren nach erfolgter radikalischer Polymerisation herrührt. Unter der Monomereinheit **M3** wird folglich eine Struktureinheit verstanden, welche von den ungesättigten Monomeren Ethen, Propen oder 1-Buten sowie Mischungen davon nach erfolgter radikalischer Polymerisation herrührt.

Als bevorzugte Polymere **P4** haben sich solche erwiesen, bei welchen die Monomereinheit **M3** nach der Polymerisation chloriert oder chlorsulfoniert worden ist.

Das Polymer **P4** kann neben der Monomereinheit **M3** weitere Monomereinheiten enthalten. Als geeignete weitere Monomereinheiten haben sich Einheiten von Vinylacetat, Acrylat, Methacrylat, Acrylsäure, Methacrylsäure, Fumarsäure, Fumarsäureester, Maleinsäure, Maleinsäureester, Maleinsäureanhydrid, Styrol, Acrylonitril, und Vinylchlorid erwiesen.

Vorzugsweise besteht das Polymer **P4** des Werkstoffs **W4** aus einem Polyolefin, vorzugsweise aus Polyethylen, Polypropylen, chloriertem Polyethylen, chloriertem Polypropylen, chlorsulfoniertem Polyethylen, chlorsulfoniertem Polypropylen oder chlorsulfoniertem Copolymer aus Ethylen und Propylen. Als besonderes bevorzugt gilt Polyethylen, insbesondere über Metallocene hergestelltes Polyethylen, sowie chlorsulfoniertes Polyethylene oder chlorsulfoniertes Polypropylen.

Ein weiterer Aspekt der vorliegenden Erfindung betrifft die Verwendung eines mehrschichtigen, insbesondere eines zweischichtigen, Verbundwerkstoffs zur Verbindung von zwei Werkstoffen. Der vorliegende erfindungsgemässe mehrschichtige Verbundwerkstoff ist überraschenderweise geeignet als Übergangsfolie zwischen zwei weiteren Folien, insbesondere zwischen zwei Folien von unterschiedlicher Zusammensetzung, welche bisher nicht oder kaum miteinander verbunden werden konnten, oder als Übergangsfolie zwischen einer Kunststofffolie und einem mineralischen Untergrund. Insbesondere ist die Übergangsfolie geeignet zur Verbindung einer Polyvinylchlorid-Folie mit einer Folie aus dem Polymer P4, insbesondere aus einem chlorsulfonierten Polyethylen.

Der mehrschichtige Verbundwerkstoff ist daher vorzugsweise eine Folie, insbesondere ein Folienband.

Ein besonderer Bereich, wo die Erfindung eingesetzt werden kann, findet sich als Übergangsfolie zwischen zwei Kunststoff-Folien in der Abdichtung, Abdeckung, Auskleidung oder Isolierung im Baubereich, insbesondere im Tiefbau. Insbesondere handelt es sich hierbei um ein Auskleiden oder Abdichten von Tunnelwänden, Becken und Dächern oder von Arbeits-, Anschluss-, Dilatations- oder Setzungsfugen sowie von Rissen und um die Sanierung undichter Fugen bei erdüberdeckten Bauteilen, im Grundwasser, in Tunneln, Schächten, Staumauern, Abwasseranlagen, Wasserreservoirs und Schwimmbädern. Für diesen Bereich haben sich insbesondere thermoplastische Übergangsfolien als bevorzugt gezeigt, welche auf PVC als Polymer **P1** und einem ENBACO-Copolymer als Polymer **P3** oder auf chlorsulfoniertem Polyethylen als Polymer **P2** und einem ENBACO-Copolymer als Polymer **P3** basieren, und welche über die Oberfläche der Schicht **S1** mit einer PVC-Folie und über die Oberfläche der Schicht **S2** mit einer Folie aus dem Polymer **P4**, insbesondere einer Folie aus einem chlorsulfonierten Polyethylen, verbunden, vorzugsweise verschweisst, werden können.

In einem weiteren Aspekt betrifft die vorliegende Erfindung ein Verfahren zur Herstellung eines erfindungsgemässen mehrschichtigen Verbundwerkstoffs umfassend die Schritte (a) Aufschmelzen und Auswalzen des ersten Werkstoffs **W1** auf einem Walzwerk, vorzugsweise einem Kalander, zu einer Folie **S1**; (b) Aufschmelzen und Auswalzen des zweiten Werkstoffs **W2** auf einem Walzwerk, vorzugsweise einem Kalander, zu einer Folie **S2**; und (c) Verbinden der Folie **S1** aus (a) mit der Folie **S2** aus (b) auf einem Walzwerk oder einer Presse, vorzugsweise einem Kalander oder Extruder.

Typischerweise wird der thermoplastische Werkstoff **W1** sowie der Werkstoff **W2** je auf eine Applikationstemperatur im Bereich von 80° bis 250°C erhitzt und aufgeschmolzen, vorzugsweise mittels eines Extruders. Als besonders geeignet haben sich Temperaturen zwischen 130°C und 210°C, insbesondere zwischen 160°C und 190°C erwiesen. Anschliessend wird der geschmolzene Werkstoff **W1** sowie der Werkstoff **W2**, vorzugsweise zuerst der Werkstoff **W1** und anschliessend der Werkstoff **W2**, ausgewalzt und typischerweise auf einem auf 100°C bis 250°C, vorzugsweise auf 140°C bis 200°C, noch mehr bevorzugt auf 160°C bis 185°C beheizten Walzwerk, vorzugsweise einem Kalander, zu einer Folie **S1** sowie zu einer Folie **S2** von einer Dicke im Bereich von 10 µm bis 5 mm, insbesondere von 100 µm bis 2 mm, besonders bevorzugt von 500 µm bis 1.5 mm, am meisten bevorzugt von etwa 1.1 mm gepresst. Das Pressen kann auch mittels einer auf 100°C bis 250°C, vorzugsweise auf 140°C bis 200°C, noch mehr bevorzugt auf 150°C bis 185°C beheizten Plattenpresse mit einem Druck von 50 bis 200 kN, vorzugsweise von 60 bis 160 kN, bezogen auf eine Pressplattenfläche von typischerweise einer DIN A4-Grösse erfolgen. Anschliessend wird die Folie **S1** vorzugsweise auf einem auf 140°C bis 200°C, noch mehr bevorzugt auf 160°C bis 185°C beheizten Walzwerk, vorzugsweise einem Kalander, oder auf einer auf 100°C bis 250°C, vorzugsweise auf 150°C bis 200°C, noch mehr bevorzugt auf 170°C bis 180°C, beheizten Plattenpresse mit einem Druck von 50 bis 150 kN, vorzugsweise von 80 bis 120 kN, bezogen auf die Pressplattenfläche, mit der Folie **S2** verbunden, vorzugsweise laminiert oder kalandriert, wodurch ein mehrschichtiger Verbundwerkstoff mit einer Gesamtdicke von 100 µm bis 10 mm, insbesondere von 1 mm bis 5 mm, besonders bevorzugt von 1.5 mm bis 3 mm, noch mehr bevorzugt von etwa 2 mm, entsteht. Typische Herstellverfahren für mehrschichtige Verbundwerkstoffe aus Kunststoff mittels eines Kalanders sind in Schwarz, Ebeling und Furth, "Kunststoffverarbeitung", 9. Auflage, 2002, Vogel Verlag, S. 23-28, beschrieben.

In einem weiteren Verfahren wird der aufgeschmolzene Werkstoff **W1** und der aufgeschmolzene Werkstoff **W2** typischerweise auf einem Extruder über eine Düse, vorzugsweise eine Breitschlitzdüse, zu einem zweischichtigen Verbundwerkstoff zusammengeführt und die beiden Werkstoffe **W1** und **W2** auf einem auf 140°C bis 200°C, noch mehr bevorzugt auf 160°C bis 185°C, beheizten Walzwerk zu einem mehrschichtigen Verbundwerkstoff mit einer Gesamtdicke von 100 µm bis 10 mm, insbesondere von 1 mm bis 5 mm, besonders bevorzugt von 1.5 mm bis 3 mm, noch mehr bevorzugt von etwa 2 mm gepresst. Typische Herstellverfahren für mehrschichtige Verbundwerkstoffe aus Kunststoff mittels eines Extruders sind in Schwarz, Ebeling und Furth, "Kunststoffverarbeitung", 9. Auflage, 2002, Vogel Verlag, S. 39-68, beschrieben.

Anschliessend wird der mehrschichtige Verbundwerkstoff typischerweise abgekühlt, typischerweise auf einem Walzwerk, zugeschnitten und auf Rollen aufgerollt.

Vorzugsweise wird der mehrschichtige Verbundwerkstoff auf einem Kalander oder einem Extruder hergestellt.

Zur Herstellung eines Folienbandes wird der mehrschichtige Verbundwerkstoff in die gewünschte Grösse zugeschnitten. Als bevorzugt haben sich Bänder mit einer Breite von 1 bis 200 cm, vorzugsweise von 5 bis 150 cm, noch mehr bevorzugt von 10 bis 100 cm, am meisten bevorzugt von 15 bis 25 cm erwiesen.

In einem weiteren Aspekt betrifft die vorliegende Erfindung ein Verfahren zum Verbinden von zwei Werkstoffen **W3** und **W4** umfassend die Schritte (a) Bereitstellen eines erfindungsgemässen mehrschichtigen, vorzugsweise zweischichtigen Verbundwerkstoffs mit mindestens zwei Schichten, einer ersten Schicht **S1** aus einem ersten Werkstoff **W1** und einer zweiten Schicht **S2** aus einem zweiten Werkstoff **W2**; (b) Verschweissen des Werkstoffs **W1** des mehrschichtigen Verbundwerkstoffs aus (a) mit mindestens einem Teil des Werkstoffs **W3**; (c) Verschweissen des Werkstoffs **W2** des mehrschichtigen Verbundwerkstoffs aus (a) mit mindestens einem Teil des Werkstoffs **W4**; wobei Schritt (b) und Schritt (c) beliebig nacheinander oder miteinander durchgeführt werden können. Der Werkstoff **W3** enthält oder besteht vorzugsweise aus Polyvinylchlorid. Der Werkstoff **W4** enthält oder besteht vorzugsweise aus mindestens einem Polymer **P4**. Besonders geeignet sind Polymere **P4**, wie sie bereits vorgängig für den Werkstoff **W4** beschrieben wurden. Dabei entsteht an der Schweissnaht ein mindestens vierschichtiger Werkstoff, wobei die Oberfläche des Werkstoffs **W1** mit dem Werkstoff **W3** und die Oberfläche des Werkstoffs **W2** mit dem Werkstoff **W4** verschweisst ist.

Das Verschweissen erfolgt vorzugsweise mit Heissluft bei einer Temperatur von vorzugsweise 300 bis 700°C, insbesondere von 400 bis 600°C, besonders bevorzugt von 450 bis 520°C. Vor dem Verschweissen kann es von Vorteil sein, dass die Oberfläche der Werkstoffe **W1** und **W2** und/oder der Werkstoffe **W3** und **W4** vorbehandelt wird. Dies kann von mechanischer, chemischer oder physikochemischer Art sein und zum Beispiel eine Plasmabehandlung, insbesondere eine Luftplasma-Vorbehandlung bei atmosphärischem Umgebungsdruck, ein Aufbringen eines Primers oder einer Haftvermittlerzusammensetzung und/oder ein mechanisches Reinigen sein. Vorzugsweise werden die Werkstoffe nicht vorbehandelt und **W1** wird direkt und ohne Vorbehandlung mit **W2** verbunden, vorzugsweise laminiert, und **W1** wird mit **W3** sowie **W2** wird mit **W4** direkt und ohne Vorbehandlung verbunden, vorzugsweise verschweisst.

In der Anwendung als Übergangsfolien werden die Folien, insbesondere in Form von Bändern, vorteilhaft auf zwei Arten mit den zu verbindenden zwei Werkstoffen **W3** und **W4** verbunden.

In einer ersten Ausführungsform wird die Übergangsfolie, insbesondere das Übergangsband, nicht vollflächig mit den zwei Werkstoffen **W3** und **W4** verbunden, vorzugsweise verschweisst, sondern lediglich an deren Rändern. Die Verbundstelle, vorzugsweise die Schweissnaht der Werkstoffe **W3** und **W4** ist vorzugsweise 1 bis 50 cm, noch mehr bevorzugt 2 bis 25 cm, am meisten bevorzugt 5 bis 10 cm, breit.

In einer zweiten Ausführungsform werden die zwei Werkstoffe **W3** und **W4** über die Übergangsfolie vollflächig überbrückend miteinander verbunden, vorzugsweise verschweisst.

Weiterhin betrifft die vorliegende Erfindung ein Verfahren zum Verkleben eines erfindungsgemässen mehrschichtigen Verbundwerkstoffs mit einem mineralischen Untergrund umfassend die Schritte:
(a) Applikation eines Klebstoffs auf mindestens einen Teil der Oberfläche des Werkstoffs **W2**; und
(b) Fügen mit der Oberfläche eines mineralischen Untergrunds innerhalb der Offenzeit des Klebstoffes;
   oder
a') Applikation eines Klebstoffs auf die Oberfläche eines mineralischen Untergrunds; und
b') Fügen mit dem Werkstoff **W2** innerhalb der Offenzeit des Klebstoffes.

In einem weiteren Schritt (c) erfolgt das Aushärten des Klebstoffs. In einer Ausführungsform wird somit der Klebstoff auf die Oberfläche des Werkstoffs **W2** des mehrschichtigen Verbundwerkstoffs appliziert und anschliessend mit der Untergrundoberfläche innerhalb der Offenzeit des Klebstoffes gefügt. In einer weiteren Ausführungsform wird der Klebstoff auf die Oberfläche des mineralischen Untergrunds, insbesondere Beton oder Mauerwerk, appliziert und anschliessend wird der mehrschichtige Verbundwerkstoff innerhalb der Offenzeit des Klebstoffes mit der Oberfläche des Werkstoffs **W2** gefügt, so dass der Klebstoff die Oberfläche des Werkstoffs **W2** des mehrschichtigen Verbundwerkstoffs kontaktiert.

Als mineralischer Untergrund eignen sich besonders Felsgestein, Mauerwerke oder Betonkonstruktionen wie z.B. Betonmauern, Betonsäulen oder insbesondere Betonplatten, die z.B. für die Auskleidung von Tunnelwänden verwendet werden. Als Untergrund eignet sich insbesondere auch eine Schicht aus Spritzbeton, die z.B. zur Sicherung von Felsgestein aufgetragen wurde.

Es kann von Vorteil sein, wenn die Oberfläche des Werkstoffs **W2** und/oder die Oberfläche des mineralischen Untergrunds vor dem Verkleben vorbehandelt wird. Dies können ein Aufbringen eines Primers oder eine Haftvermittlerzusammensetzung und/oder ein mechanisches Reinigen sein. Im Falle, dass die Oberfläche des mineralischen Untergrunds vorbehandelt wird, ist das mechanische Reinigen, insbesondere ein Bürsten, Schleifen, Sand- oder Kugelstrahlen, von grossem Vorteil. Im Falle von Beton ist für die Gewährleistung einer guten und langlebigen Verklebung das Entfernen der sogenannten Zementhaut, insbesondere mittels Schleifen, Sandstrahlen oder Kugelstrahlen, und gegebenenfalls zusätzlich die Verwendung eines Primers, als vorteilhaft zu empfehlen. Besonders bevorzugt ist aber ein Verfahren ohne Vorbehandlung, bei dem der Werkstoff **W2** direkt und ohne Vorbehandlung über den Klebstoff mit dem mineralischen Untergrund verklebt wird.

Es hat sich gezeigt, dass sich Polyurethanklebstoffe, (Meth)acrylatklebstoffe, Epoxidharzklebstoffe oder Klebstoffe auf Basis von Alkoxysilan-funktionellen Prepolymeren bestens für eine Verklebung eignen. Besonders bevorzugt sind die Epoxidharzklebstoffe.

Als Polyurethanklebstoffe sind einerseits einkomponentige feuchtigkeitshärtende Klebstoffe oder zweikomponentige Polyurethanklebstoffe geeignet. Derartige Klebstoffe enthalten Polyisocyanate, insbesondere in Form von Isocyanat-Gruppen aufweisenden Prepolymeren. Bevorzugt werden Polyurethanklebstoffe, wie sie von Sika Schweiz AG unter den Produktelinien Sikaflex®, SikaPower® und SikaForce® kommerziell verkauft werden.

Als (Meth)acrylatklebstoffe sind zweikomponentige Klebstoffe zu verstehen, deren erste Komponente Acrylsäure und/oder Methacrylsäure und/oder deren Ester umfasst, und deren zweite Komponente ein Radikalbildner, insbesondere ein Peroxid, umfasst. Bevorzugte derartige Klebstoffe sind unter der Produktelinie SikaFast® kommerziell von Sika Schweiz AG erhältlich.

Als Epoxidharzklebstoffe werden Klebstoffe verstanden, welche auf Basis von Glycidylethern, insbesondere von Diglycidylether von Bisphenol-A und/oder Bisphenol-F, formuliert sind. Besonderes geeignete sind zweikomponentige Epoxidharzklebstoffe, deren eine Komponente Diglycidylether von Bisphenol-A und/oder Bisphenol-F enthalten und deren zweite Komponente Polyamine und/oder Polymerkaptane enthalten. Bevorzugt werden zweikomponentige Epoxidharzklebstoffe, wie sie unter der Produktelinie Sikadur® kommerziell von Sika Schweiz AG erhältlich sind. Als besonders geeignet zum Verkleben von Folien mit einem Untergrund haben sich die zweikomponentigen Epoxidharzklebstoffe Sikadur®-Combiflex®, Sikadur®-31, Sikadur®-31 DW und Sikadur®-33, bevorzugt Sikadur®-Combiflex®, von Sika Schweiz AG gezeigt.

Als Klebstoffe auf Basis von Alkoxysilan-funktionellen Prepolymeren werden insbesondere Klebstoffe auf Basis von MS-Polymeren oder SPUR (Silane terminated Polyurethanes)-Prepolymeren verstanden. Derartige Alkoxysilan-funktionelle Prepolymere lassen sich beispielsweise über eine Hydrosilyierungsreaktion aus mindestens zwei C=C-Doppelbindung aufweisenden Polyether, insbesondere aus allylterminierten Polyoxyalkylenpolymeren, und mit einem Hydrosilan oder über eine Additionsreaktion von Isocyanatoalkylalkoxysilanen an Polyole oder an Hydroxy-funktionelle Polyurethanprepolymere oder über eine Additionsreaktion von Aminoalkylalkoxysilanen an Isocyanat-funktionelle Polyurethanprepolymere herstellen, wobei die Polyurethanprepolymere ihrerseits über eine Reaktion von Polyisocyanaten und Polyolen und/oder Polyaminen in bekannter Art und Weise zugänglich sind. Klebstoffe auf Basis von Alkoxysilan-funktionellen Prepolymeren sind feuchtigkeitshärtend und reagieren bei Raumtemperatur.
Grundsätzlich können auch reaktive Heissschmelzklebstoffe eingesetzt werden, wie sie von Sika Schweiz AG unter der Produktelinie SikaMelt® kommerziell verkauft werden. Bevorzugt werden jedoch raumtemperaturhärtende Klebstoffe.

Nach dem Fügen erfolgt in einem weiteren Schritt die Aushärtung des Klebstoffes. Es ist dem Fachmann jedoch selbstverständlich bewusst, dass die Vernetzung des Klebstoffs bei zweikomponentigen Klebstoffen bereits nach dem Mischen, beziehungsweise bei einkomponentigen Polyurethanklebstoffen oder auf Alkoxysilan-funktionellen Prepolymeren basierenden Klebstoffen unmittelbar nach dem Kontakt mit Luftfeuchtigkeit, beginnt. Somit ist der Term des Aushärtens in Schritt (c) nicht als Beginn des Aushärtens, sprich Beginn der Vernetzung, zu verstehen, sondern dahin gehend, dass die Vernetzung bereits genügend weit fortgeschritten ist, dass der Klebstoff bereits eine so grosse Festigkeit aufgebaut hat, dass er Kräfte übertragen kann, und die sogenannte Frühfestigkeit erreicht hat. Die Aushärtung ist abgeschlossen, wenn der Klebstoff seine Endfestigkeit erreicht hat.

In dieser Anwendung wird der mehrschichtige Verbundwerkstoff, vorzugsweise die Übergangsfolie, vorteilhaft auf zwei Arten verklebt.

In einer ersten Form, vorzugsweise bei Dilationsfugen, wird die Übergangsfolie nicht vollflächig auf den mineralischen Untergrund geklebt, sondern lediglich an deren Rändern. Die Ränder der Folie sind vorteilhaft von Klebstoff beidseitig umfasst. Über der Dilationsfuge ist somit vorteilhaft die Folie nicht mit einem Klebstoff überdeckt. Die vorteilhaft elastische Folie kann somit Bewegungen der die Dilationsfugen begrenzenden Beton- oder Mauerwerkteilen, auf welchen die Folie ja mittels Klebstoff kraftschlüssig verbunden ist, mitmachen und somit die rissüberbrückende Abdichtfunktion bewerkstelligen.

In einer zweiten Form wird die Übergangsfolie über eine Arbeitsfuge, beziehungsweise einen Riss, vollflächig überbrückend mit dem Beton oder dem Mauerwerk verklebt.

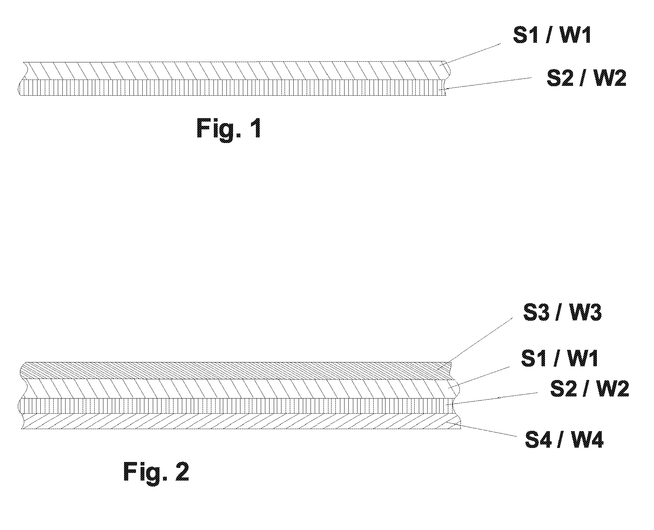

**Fig. 1** zeigt eine schematische Darstellung eines Querschnitts durch einen zweischichtigen Verbundwerkstoff. Die zweischichtige Folie besteht aus einer ersten Schicht **S1** aus dem Werkstoff **W1** und einer zweiten Schicht **S2** aus dem Werkstoff **W2**. Die erste Schicht **S1** ist mit der zweiten Schicht **S2** in direktem Kontakt verbunden.

**Fig. 2** zeigt eine schematische Darstellung eines Querschnitts durch einen mehrschichtigen Verbundwerkstoff. Der mehrschichtige Verbundwerkstoff besteht aus einer zweischichtigen Übergangsfolie mit einer ersten Schicht **S1** aus dem Werkstoff **W1** und einer zweiten Schicht **S2** aus dem Werkstoff **W2**, wobei die Schicht **S1** unmittelbar mit der Schicht **S3** aus dem Werkstoff **W3** und die Schicht **S2** unmittelbar mit der Schicht **S4** aus dem Werkstoff **W4** verbunden ist. Die erste Schicht **S1** ist mit der zweiten Schicht **S2** in direktem Kontakt verbunden.

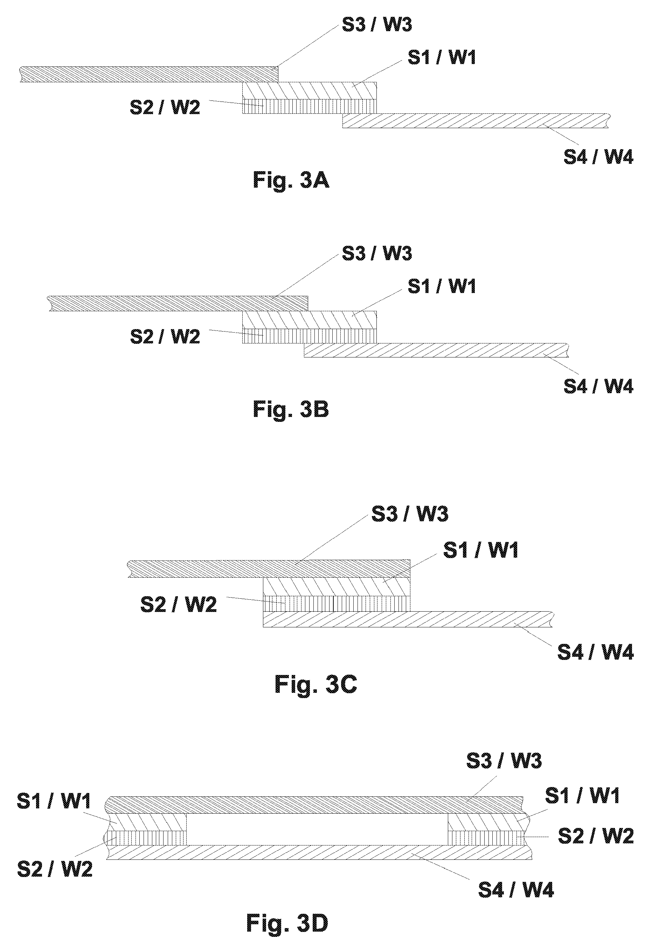

**Fig. 3A, 3B, 3C** und **3D** zeigen verschiedene Ausführungsformen, wie zwei Folien aus unterschiedlichem Material über eine zweischichtige Übergangsfolie auf verschiedene Arten miteinander verbunden werden können.

**Fig. 3A** zeigt eine schematische Darstellung eines Querschnitts durch einen mehrschichtigen Verbundwerkstoff. Der mehrschichtige Verbundwerkstoff besteht aus einer zweischichtigen Übergangsfolie, vorzugsweise einem Folienband, mit einer ersten Schicht **S1** aus dem Werkstoff **W1** und einer zweiten Schicht **S2** aus dem Werkstoff **W2**, wobei die Schicht **S1** am Rand unmittelbar mit der Schicht **S3** aus dem Werkstoff **W3** und die Schicht **S2** am Rand unmittelbar mit der Schicht **S4** aus dem Werkstoff **W4** verbunden ist. Die erste Schicht **S1** ist mit der zweiten Schicht **S2** in direktem Kontakt verbunden. Die Verbundstelle, vorzugsweise die Schweissnaht zwischen den Werkstoffen **W1** und **W3**, sowie zwischen **W2** und **W4** ist vorzugsweise 0.5 bis 20 cm, noch mehr bevorzugt 1 bis 10 cm, am meisten bevorzugt 2 bis 5 cm, breit. Die Verbundstelle, vorzugsweise die Schweissnaht, ist weniger breit als die Hälfte der Breite der Übergangsfolie.

**Fig. 3B** zeigt eine schematische Darstellung eines Querschnitts durch einen mehrschichtigen Verbundwerkstoff wie in Fig. 3A beschrieben. Im Unterschied zu dem in Fig. 3A beschriebenen mehrschichtigen Verbundwerkstoff, ist die Verbundstelle, vorzugsweise die Schweissnaht, etwa gleich breit wie die Hälfte der Breite der Übergangsfolie.

**Fig. 3C** zeigt eine schematische Darstellung eines weiteren Querschnitts durch einen mehrschichtigen Verbundwerkstoff wie in Fig. 3A beschrieben. Im Unterschied zu dem in Fig. 3A beschriebenen mehrschichtigen Verbundwerkstoff, ist die Verbundstelle, vorzugsweise die Schweissnaht, etwa gleich breit wie die Breite der Übergangsfolie, d.h vorzugsweise 1 bis 50 cm, noch mehr bevorzugt 2 bis 25 cm, am meisten bevorzugt 5 bis 10 cm, breit.

**Fig. 3D** zeigt eine schematische Darstellung eines Querschnitts durch einen mehrschichtigen Verbundwerkstoff. Der mehrschichtige Verbundwerkstoff besteht aus zwei Folien, einer Schicht **S3** aus dem Werkstoff **W3** und einer Schicht **S4** aus dem Werkstoff **W4**, welche am Rand der Schicht **S3** und der Schicht **S4** jeweils über eine zweischichtigen Übergangsfolie mit einer ersten Schicht **S1** aus dem Werkstoff **W1** und einer zweiten Schicht **S2** aus dem Werkstoff **W2** unmittelbar verbunden sind. Die erste Schicht **S1** ist mit der zweiten Schicht **S2** in direktem Kontakt verbunden.

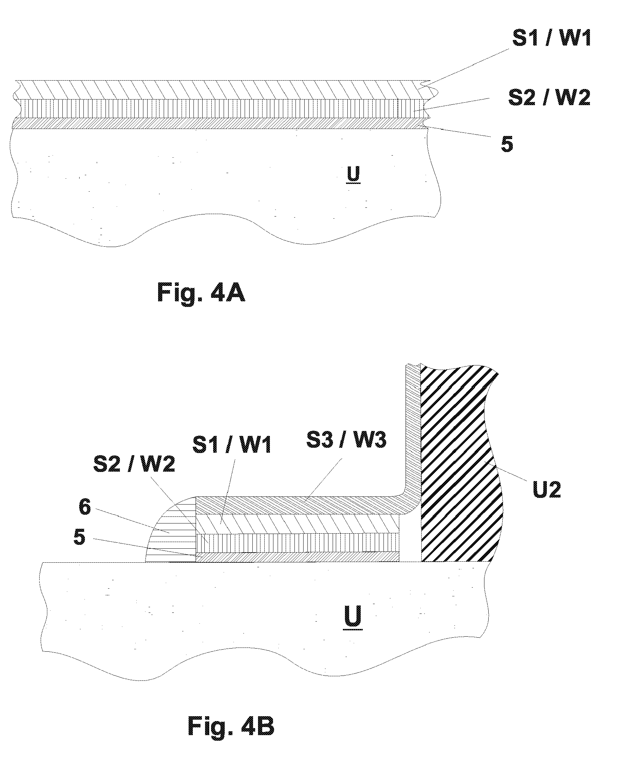

**Fig. 4A** zeigt eine schematische Darstellung eines Querschnitts durch eine zweischichtige Übergangsfolie, welche auf einen mineralischen Untergrund geklebt ist. Die erste Schicht **S1** aus dem Werkstoff **W1** ist mit der zweiten Schicht **S2** aus dem Werkstoff W2 kraftschlüssig in direktem Kontakt verbunden. Die zweite Schicht **S2** ist mit dem mineralischen Untergrund **U** über einen Klebstoff **5** verklebt.

**Fig. 4B** zeigt eine schematische Darstellung eines Querschnitts durch eine zweischichtige Übergangsfolie, welche auf einen mineralischen Untergrund geklebt ist und welche an einer Folie **S3** aus dem Werkstoff **W3** haftet. Die erste Schicht **S1** aus dem Werkstoff **W1** ist mit der zweiten Schicht **S2** aus dem Werkstoff **W2** sowie mit der Folie **S3** aus dem Werkstoff **W3** kraftschlüssig in direktem Kontakt verbunden. Die zweite Schicht **S2** ist mit dem mineralischen Untergrund **U** über einen Klebstoff **5** verklebt. Die Folie **S3** ist z.B. eine Tunnelfolie, welche zur Verkleidung der Tunnelwand verwendet wird und welche über die Übergangsfolie und einen Klebstoff am Untergrund U, vorzugsweise einem Betonboden haftet. Als zweiten mineralischen Untergrund **U2** eignen sich besonders Felsgestein, Mauerwerke oder Betonkonstruktionen wie z.B. Betonmauern, Betonsäulen oder insbesondere Betonplatten, die z.B. für die Auskleidung von Tunnelwänden verwendet werden. Der zweite mineralische Untergrund U2 ist vorzugsweise eine Tunnelwand. Zur Abdichtung der Übergangsfolie kann der mehrschichtige Verbundwerkstoff mit einem Dichtungsmittel 6 geschützt werden, welches ermöglicht, dass weder Feuchtigkeit, noch sonstige Umwelteinflüsse mit der zweischichtigen Übergangsfolie in Kontakt kommen.

### Beispiele

Die Erfindung wird nun anhand von Beispielen näher erläutert.

### 1. Herstellung des zweischichtigen Übergangsbandes

### Herstellung erste Schicht:

100 Gew.-Teile PVC (K-Wert 70) wurden mit 50-70 Gew.-Teilen ENBACO (Elvaloy HP® 441 von DuPont), 2-3 Gew.-Teilen Ba/Zn-Stabilisator, 1 Gew.-Teil epoxidiertes Sojabohnenöl und 10-30 Gew.-Teilen Kreide gemischt. Circa 200 g dieser Zusammensetzung wurden auf einem Collin Walzwerk bei einer Temperatur um 170°C aufgeschmolzen, während 5 bis 10 Minuten gemischt und zu einem Fell von circa 1.2 mm Dicke ausgewalzt. Anschliessend wurde das Fell mittels einer auf eine Temperatur zwischen 170 und 180°C beheizten Plattenpresse mit einem Druck von 80 kN, bezogen auf die Pressplattenfläche der Grösse DIN A4, zu einer Folie von 1.1 mm Dicke gepresst. Die Folien wurden auf die Dimension 280 x 200 x 1.1 mm zugeschnitten.

### Herstellung zweite Schicht:

100 Gew.-Teile Hypalon® 45 von DuPont wurden mit 10-25 Gew.-Teilen ENBACO (Elvaloy HP® 441 von DuPont), 5 Gew.-Teilen Magnesiumhydroxid oder Magnesiumoxid, 10 - 60 Gew.-Teilen Kreide, 2 Gew.-Teilen Verarbeitungshilfsmittel, vorzugsweise Polyethylenglykol, und 5 Gew.-Teilen Pigment (Titandioxid und / oder Russ) gemischt. Circa 200 g dieser Zusammensetzung wurden auf einem Collin Walzwerk bei einer Temperatur um 150°C aufgeschmolzen, während 5 bis 10 Minuten gemischt und zu einem Fell von circa 1.2 mm Dicke ausgewalzt. Anschliessend wurde das Fell mittels einer auf eine Temperatur zwischen 150 und 160°C beheizten Plattenpresse mit einem Druck von 80 kN, bezogen auf die Pressplattenfläche der Grösse DIN A4, zu einer Folie von 1.1 mm Dicke gepresst. Die Folien wurden auf die Dimension 280 x 200 x 1.1 mm zugeschnitten.

### Übergangsband

Diese beiden Folien wurden anschliessend auf der auf 175° beheizten Plattenpresse unter einem Druck von 120 kN, bezogen auf die Pressplattenfläche der Grösse DIN A4, zu einer zweischichtigen Folie mit einer Gesamtdicke von 2mm zusammenlaminiert.

### 2. Verschweissung

Die so erhaltenen Folienmuster wurden auf der PVC-Seite mit einer PVC-Weich Dichtungsbahn, z.B. einer Sikaplan® 14.6 Tunnelbahn, erhältlich bei Sika Schweiz AG, verschweisst. Die Verschweissung erfolgte mit Heissluft durch einen Handfön bei einer Temperatur zwischen 450 und 520°C. Senkrecht zur Schweissnaht wurden 5 Streifen ä 200mm Länge und 50mm Breite ausgestanzt und der Schälwiderstand der Fügenaht nach EN 12316-2 mittels einer Zwick-Zugprüfmaschine Typ 1446 bestimmt.

Der Mittelwert des Schälwiderstandes von 5 Proben liegt bei 500 N/50mm.

Ebenso wurde das Folienmuster auf der Hypalon-Seite mit einer Polyolefin-Dichtungsbahn, z.B. Sikaplan® 20 Peco, erhältlich bei Sika Schweiz AG, verschweisst. Die Verschweissung erfolgte mit Heissluft durch einen Handfön bei Temperaturen zwischen 420 und 480°C. Der nach EN 12316-2 bestimmte Schälwiderstand betrug im Mittel 540 N/50mm.

### 3. Verklebung

Aus dem Übergangsband, hergestellt gemäss Beispiel 1, wurden 2 Streifen in einer Breite von 50 mm und 150 mm Länge ausgeschnitten. Vor dem Verkleben wurde die Hypalon-Seite des Bandes mit dem Sika® Colma-Reiniger, erhältlich bei Sika Schweiz AG, gereinigt. Dann wurde der 2-Komponenten Epoxikleber Sikadur®-Combiflex® 31, erhältlich bei Sika Schweiz AG, über eine Verklebungslänge von 50mm und einer Klebstoffdicke von 1 mm aufgetragen und das Band mit sandgestrahltem Beton (Gartenplatte) verklebt.

Nach einer Aushärtzeit von 7 Tagen bei 23°C, 50% relativer Luftfeuchtigkeit, wurde die Schälhaftung mittels Spitzzange geprüft. Hierbei wurde mit der Spitzzange das lose Folienende ergriffen und mit der Zange aufgerollt. Beim Erreichen der Verklebung wurde durch Aufbringen von Drehkraft auf die Zange die Schälhaftung qualitativ beurteilt nach dem folgenden Beurteilungsschlüssel:
- 1 =: nicht schälbar (gut) → Folienbruch
- 2 =: mittel schälbar (genügend) → Abschälen unter Deformation des Bandes möglich
- 3 =: leicht schälbar (schlecht)

Die Verklebung des Übergangsbandes (Hypalon-Seite) mit Beton ist als " nicht schälbar " zu beurteilen. Es wurde Klebstoffkohäsionsbruch / Folienbruch festgestellt.

Anschliessend wurde die PVC-Seite des Übergangsbandes mit einer PVC-Weich Dichtungsbahn, z.B. einer Sikaplan® 14.6 Tunnelbahn, erhältlich bei Sika Schweiz AG, verschweisst. Die Verschweissung erfolgte mit Heissluft durch einen Handfön bei einer Temperatur zwischen 450 und 520°C. Alternativ kann die PVC-Seite des Übergangsbandes vor der Verklebung mit dem Beton mit einer PVC-Weich Dichtungsbahn, z.B. einer Sikaplan® 14.6 Tunnelbahn, erhältlich bei Sika Schweiz AG, verschweisst werden und anschliessend mit der Hypalon-Seite des Übergangsbandes und einem Epoxikleber, z.B. Sikadur®-Combiflex® 31, erhältlich bei Sika Schweiz AG, auf eine Betonoberfläche geklebt werden.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Bezugszeichen

- **U**: mineralischer Untergrund
- **U2**: zweiter mineralischer Untergrund
- **S1/W1**: erste Schicht / erster Werkstoff
- **S2/W2**: zweite Schicht / zweiter Werkstoff
- **S3/W3**: dritte (weitere) Schicht / dritter Werkstoff
- **S4/W4**: vierte (weitere) Schicht / vierter Werkstoff
- **5**: Klebstoff
- **6**: Dichtungsmittel

## Patentansprüche

1. Mehrschichtiger Verbundwerkstoff umfassend mindestens eine erste Schicht **S1** aus einem ersten thermoplastischen polymeren Werkstoff **W1** und mindestens eine zweite Schicht **S2** aus einem zweiten thermoplastischen polymeren Werkstoff **W2**,
wobei der erste Werkstoff **W1** ein Polymer **P1**, aus Polyvinylchlorid (PVC) oder thermoplastischem Polyurethan, und mindestens ein thermoplastisches Polymer **P3** enthält oder daraus besteht,
wobei der zweite Werkstoff **W2** ein Polymer **P2** und mindestens ein thermoplastisches Polymer **P3** enthält oder daraus besteht,
wobei das Polymer **P2** mindestens eine Monomereinheit **M1** aufweist,
wobei die Monomereinheit **M1** ausgewählt ist aus der Gruppe bestehend aus Ethylen-, Propylen- und Butylen-Einheit und Mischungen davon,
und wobei die Anzahl der Monomereinheit **M1** mindestens 50% aller Monomereinheiten des Polymers **P2** beträgt,
und wobei das Polymer **P3** des ersten Werkstoffs **W1** und des zweiten Werkstoffs **W2** dasselbe thermoplastische Polymer ist.

2. Mehrschichtiger Verbundwerkstoff nach Anspruch 1, **dadurch gekennzeichnet, dass** die Polymere **P1, P2** und **P3** voneinander verschieden sind.

3. Mehrschichtiger Verbundwerkstoff nach einem der vorhergehenden Ansprüche, **dadurch gekennzeichnet, dass** der erste Werkstoff **W1** ein Polyvinylchlorid und mindestens ein Polymer **P3** enthält oder daraus besteht.

4. Mehrschichtiger Verbundwerkstoff nach einem der vorhergehenden Ansprüche, **dadurch gekennzeichnet, dass** das Polymers **P2** des zweiten Werkstoffs **W2** ausgewählt ist aus der Gruppe bestehend aus Polyethylen, Polypropylen, chloriertem Polyethylen, chloriertem Polypropylen, chlorsulfoniertem Polyethylen, chlorsulfoniertem Polypropylen und chlorsulfoniertem Copolymer aus Ethylen und Propylen.

5. Mehrschichtiger Verbundwerkstoff nach einem der vorhergehenden Ansprüche, **dadurch gekennzeichnet, dass** das Polymer **P3** ein thermoplastisches Polyurethan ist, welches hergestellt ist aus Polyisocyanat und Polyesterpolyol oder Polyetherpolyol ist.

6. Mehrschichtiger Verbundwerkstoff nach einem der Ansprüche 1 bis 4, **dadurch gekennzeichnet, dass** das Polymer **P3** ein Copolymer **CP**, aus mindestens zwei ethylenisch ungesättigten Monomeren, enthält oder daraus besteht, wobei mindestens eines der Monomere ausgewählt ist aus der Gruppe bestehend aus Ethylen, Vinylacetat, Acrylat, Methacrylat, Acrylsäure, Methacrylsäure, Fumarsäure, Maleinsäure, Styrol, Acrylonitril, und Butadien.

7. Mehrschichtiger Verbundwerkstoff nach Anspruch 6, **dadurch gekennzeichnet, dass** das Polymer **P3** ein Ethylen-Octen, Ethylen-Hexen oder Ethylen-Buten Copolymer enthält oder daraus besteht, wobei das Copolymer durch Metallocenkatalyse hergestellt worden ist.

8. Mehrschichtiger Verbundwerkstoff nach Anspruch 6, **dadurch gekennzeichnet, dass** das Polymer **P3** ein Copolymer **CP** der Monomere Ethylen und Vinylacetat oder Ethylen und (Meth)Acrylat, sowie gegebenenfalls Kohlenmonoxid, enthält oder daraus besteht, wobei das Copolymer **CP** 30-90 Gew.%, bevorzugt 55-75 Gew.%, Ethyleneinheiten und 10-70 Gew.%, bevorzugt 25-45 Gew.%, Vinylacetat- oder (Meth)Acrylat-Einheiten und gegebenenfalls 1-20 Gew.% Kohlenmonoxid-Einheiten enthält, wobei die Gew.% jeweils bezogen sind auf das Gesamtgewicht des Copolymers **CP**.

9. Mehrschichtiger Verbundwerkstoff nach Anspruch 6, **dadurch gekennzeichnet, dass** das Polymer **P3** ein Copolymer **CP** der Monomere Butadien und Acrylonitril ist, wobei das Copolymer 18-48 Gew.% Acrylonitril-Einheiten enthält, wobei die Gew.% bezogen sind auf das Gesamtgewicht des Copolymers.

10. Mehrschichtiger Verbundwerkstoff nach Anspruch 6, **dadurch gekennzeichnet, dass** das Polymer **P3** ein Terpolymer der Monomere Acrylat, Styrol und Acrylonitril ist.

11. Mehrschichtiger Verbundwerkstoff nach Anspruch 6, **dadurch gekennzeichnet, dass** das Polymer **P3** ein chloriertes Polyethylen ist.

12. Mehrschichtiger Verbundwerkstoff nach einem der vorhergehenden Ansprüche, **dadurch gekennzeichnet, dass** der erste Werkstoff **W1** mindestens ein Polymer **P3** in der Menge von 0.5-80 Gew.-%, bevorzugt von 5-60 Gew.-%, noch mehr bevorzugt von 10-50 Gew.-%, insbesondere bevorzugt von 20-35 Gew.-% bezogen auf das Gesamtgewicht des Werkstoffs **W1** enthält.

13. Mehrschichtiger Verbundwerkstoff nach einem der vorhergehenden Ansprüche, **dadurch gekennzeichnet, dass** der zweite Werkstoff **W2** mindestens ein Polymer **P3** in der Menge von 0.5-50 Gew.-%, bevorzugt von 5-30 Gew.-%, noch mehr bevorzugt von 10-20 Gew.-%, bezogen auf das Gesamtgewicht des Werkstoffs **W2** enthält.

14. Mehrschichtiger Verbundwerkstoff nach einem der vorhergehenden Ansprüche, **dadurch gekennzeichnet, dass** der Werkstoff **W1** oder **W2** mindestens einen weiteren Zusatzstoff umfasst, wobei der Zusatzstoff vorzugsweise ausgewählt ist aus der Gruppe bestehend aus Stabilisatoren, Weichmacher, Antioxidantien, Füllstoffe, Verarbeitungshilfsmittel und Pigmente.

15. Mehrschichtiger Verbundwerkstoff nach einem der vorhergehenden Ansprüche, **dadurch gekennzeichnet, dass** der erste Werkstoff **W1** und der zweite Werkstoff **W2** miteinander kraftschlüssig, vorzugsweise in direktem Kontakt miteinander, verbunden sind.

16. Mehrschichtiger Verbundwerkstoff nach einem der vorhergehenden Ansprüche, **dadurch gekennzeichnet, dass** der mehrschichtige Verbundwerkstoff eine weitere Schicht **S3** aus einem weiteren Werkstoff **W3** umfasst, welche mit dem ersten Werkstoff **W1** der ersten Schicht **S1** kraftschlüssig verbunden ist.

17. Mehrschichtiger Verbundwerkstoff nach Anspruch 16, **dadurch gekennzeichnet, dass** der Werkstoff **W3** Polyvinylchlorid enthält oder daraus besteht.

18. Mehrschichtiger Verbundwerkstoff nach einem der vorhergehenden Ansprüche, **dadurch gekennzeichnet, dass** der mehrschichtige Verbundwerkstoff eine weitere Schicht **S4** aus einem weiteren Werkstoff **W4** umfasst, welches mit dem zweiten Werkstoff **W2** der zweiten Schicht **S2** kraftschlüssig verbunden ist.

19. Mehrschichtiger Verbundwerkstoff nach Anspruch 18, **dadurch gekennzeichnet, dass** der Werkstoff **W4** mindestens ein Polymer **P4** enthält oder daraus besteht, wobei das Polymer **P4** mindestens eine Monomereinheit **M3** aufweist, wobei die Monomereinheit **M3** ausgewählt ist aus der Gruppe bestehend aus Ethylen-, Propylen- und Butylen-Einheit und Mischungen davon, und wobei die Menge der Monomereinheit **M3** mindestens 50% aller Monomereinheiten des Polymers **P4** beträgt.

20. Verwendung eines mehrschichtigen Verbundwerkstoffs nach einem der Ansprüche 1 bis 15 zur Verbindung von zwei Werkstoffen **W3** und **W4**, wobei der Werkstoff **W3** Polyvinylchlorid enthält oder daraus besteht und wobei der Werkstoff **W4** mindestens ein Polymer **P4** enthält oder daraus besteht, wobei das Polymer **P4** mindestens eine Monomereinheit **M3** aufweist, wobei die Monomereinheit **M3** ausgewählt ist aus der Gruppe bestehend aus Ethylen-, Propylen- und Butylen-Einheit und Mischungen davon, und wobei die Menge der Monomereinheit **M3** mindestens 50% aller Monomereinheiten des Polymers **P4** beträgt.

21. Verwendung eines mehrschichtigen Verbundwerkstoffs nach einem der Ansprüche 1 bis 19 zur Abdichtung, Abdeckung, Auskleidung oder Isolierung von Bauwerken, vorzugsweise von Tunnelbauten, Bädern oder Dächern.

22. Verfahren zur Herstellung eines mehrschichtigen Verbundwerkstoffs nach einem der Ansprüche 1 bis 15 umfassend die Schritte
a) Aufschmelzen und Auswalzen des ersten Werkstoffs **W1** auf einem Walzwerk zu einer Folie **S1**;
b) Aufschmelzen und Auswalzen des zweiten Werkstoffs **W2** auf einem Walzwerk zu einer Folie **S2**;
c) Verbinden der Folie **S1** aus (a) mit der Folie **S2** aus (b) auf einem Walzwerk.

23. Verfahren zum Verbinden von zwei Werkstoffen **W3** und **W4** umfassend die Schritte
a) Bereitstellen eines mehrschichtigen Verbundwerkstoffs nach einem der Ansprüche 1 bis 15;
b) Verschweissen des Werkstoffs **W1** des mehrschichtigen Verbundwerkstoffs aus (a) mit dem Werkstoff **W3**;
c) Verschweissen des Werkstoffs **W2** des mehrschichtigen Verbundwerkstoffs aus (a) mit dem Werkstoff **W4**;
wobei Schritt (b) und Schritt (c) beliebig nacheinander oder miteinander durchgeführt werden.

24. Verfahren nach Anspruch 23, **dadurch gekennzeichnet, dass** der Werkstoff **W3** Polyvinylchlorid enthält oder daraus besteht.

25. Verfahren nach Anspruch 23 oder 24, **dadurch gekennzeichnet, dass** der Werkstoff **W4** mindestens ein Polymer **P4** enthält oder daraus besteht, wobei das Polymer **P4** mindestens eine Monomereinheit **M3** aufweist, wobei die Monomereinheit **M3** ausgewählt ist aus der Gruppe bestehend aus Ethylen-, Propylen- und Butylen-Einheit und Mischungen davon, und wobei die Menge der Monomereinheit **M3** mindestens 50% aller Monomereinheiten des Polymers **P4** beträgt.

26. Verfahren zum Verkleben eines mehrschichtigen Verbundwerkstoffs nach einem der Ansprüche 1 bis 15 mit einem mineralischen Untergrund umfassend die Schritte
a) Applikation eines Klebstoffs auf die Oberfläche des Werkstoffs **W2**;
b) Fügen mit der Oberfläche des mineralischen Untergrunds innerhalb der Offenzeit des Klebstoffes
oder
a') Applikation eines Klebstoffs auf die Oberfläche des mineralischen Untergrunds;
b') Fügen mit dem Werkstoff **W2** innerhalb der Offenzeit des Klebstoffes.

27. Verfahren nach Anspruch 26, **dadurch gekennzeichnet, dass** das Verfahren einen weiteren Schritt c) umfassend die Aushärtung des Klebstoffs umfasst.

28. Verfahren nach einem der Ansprüche 26 oder 27, **dadurch gekennzeichnet, dass** der Klebstoff ein Polyurethanklebstoff, ein (Meth)acrylatklebstoff, ein Klebstoff auf Basis von Alkoxysilan-funktionellen Prepolymeren oder ein Epoxidharzklebstoff, vorzugsweise ein Epoxidharzklebstoff ist.

29. Bauwerk umfassend einen mehrschichtigen Verbundwerkstoff nach einem der Ansprüche 1 bis 19.

30. Bauwerk nach Anspruch 29, **dadurch gekennzeichnet, dass** das Bauwerk ein Gebäude, eine Strasse, eine Brücke oder ein Tunnel ist.
